# EUROPEAN PATENT SPECIFICATION

(11) **EP 3 936 660 B1**
(45) Date of publication and mention of the grant of the patent: **01.05.2024**
(21) Application number: 20880982.2
(22) Date of filing: 26.10.2020
(51) Int. Cl.: B60C 9/20, B60C 11/00, B60C 9/00

(54) **TIRE**
REIFEN
PNEUMATIQUE

(30) Priority: 29.10.2019 JP 2019196461
(43) Date of publication of application: 12.01.2022
(73) Proprietor: Sumitomo Rubber Industries, Ltd., Kobe-shi, Hyogo 651-0072 (JP)
(72) Inventor: MINAGOSHI, Akira, Kobe-shi Hyogo 651-0072 (JP); MIAO, Dong, Kobe-shi Hyogo 651-0072 (JP)
(74) Representative: Manitz Finsterwald Patent- und Rechtsanwaltspartnerschaft mbB
(86) International application number: PCT/JP2020/040124
(87) International publication number: WO 2021/085386

(56) References cited:
- JP-A- H07 149 957
- JP-A- 2001 080 313
- JP-A- 2014 151 731
- JP-A- 2017 048 351
- JP-A- 2017 190 032
- JP-A- 2018 058 515

## Description

### Technical Field

The present invention relates to tires in which flat single-wire cords are used.

### Background Art

Conventionally, tires in which flat single-wire cords are used in a belt ply have been proposed (for example, see Patent Document 1).

### Prior Art Document

### Patent Document

Patent Document 1: Japanese Unexamined Patent Application Publication No. 2018-58515

A tire in accordance with the preamble of claim 1 is known from JP 2018 058515 A. Related tires are known from JP 2001 080313 A, JP 2017 190032 A and JP 2017 048351 A. Tires comprising a belt layer not being formed by a flattened single wire cord are known from JP H07 149957 A and JP 2014 151731 A.

### Summary of Invention

### Problems to be Solved by Invention

In the above-mentioned belt ply, topping rubber can be easily formed thin, which contributes to reduction in weight and improvement in fuel efficiency performance.

However, due to the reduction in thickness of the topping rubber, it is possible that noise performance and ride comfort performance are degraded.

The present invention was made in view of the above, and a primary object thereof is to provide a tire with the noise performance and the ride comfort performance improved in a good balance and with the reduction in weight and the fuel-efficiency performance improved in a good balance.

### Means for Solving Problem

The present invention is a tire having a belt layer disposed inside a tread portion, wherein the belt layer has a plurality of belt plies, the plurality of belt plies includes a single-wire cord having a short diameter SD and a long diameter LD, with a ratio SD/LD between the short diameter SD and the long diameter LD being less than 1.00, and a topping rubber covering the single-wire cord, the single-wire cord is arranged so that a direction of the short diameter SD is oriented to a thickness direction of the plurality of belt plies the topping rubber has a complex elastic modulus (E*) of less than 7 MPa, wherein the complex elastic modulus (E*) is a value measured in accordance with Japanese Industrial Standard JIS-K6394 under conditions of temperature of 70 degrees Celsius, initial strain of 10%, an amplitude of dynamic strain of ±1.0%, and a frequency of 10 Hz, and a distance D between the single-wire cords between the plurality of belt plies is 0.30 mm to 1.05 mm.

In the tire according to the present invention, it is preferred that the complex elastic modulus (E*) is 5 MPa or less.

In the tire according to the present invention, it is preferred that the complex elastic modulus (E*) is 3 MPa or more.

In the tire according to the present invention, it is preferred that the short diameter SD is 0.15 mm to 0.42 mm.

In the tire according to the present invention, it is preferred that the short diameter SD is 0.20 mm to 0.35 mm.

In the tire according to the present invention, it is preferred that the ratio SD/LD of the single-wire cord is 0.70 or less.

In the tire according to the present invention, it is preferred that the ratio SD/LD of the single-wire cord is 0.50 or less.

In the tire according to the present invention, it is preferred that the distance D is 0.50 mm to 0.80 mm.

In the tire according to the present invention, it is preferred that a difference D-SD between the distance D and the short diameter SD is 0.20 mm to 0.45 mm.

In the tire according to the present invention, it is preferred that the difference D-SD is 0.25 mm to 0.40 mm.

In the tire according to the present invention, it is preferred that the tread portion has a tread rubber having a groove provided in an outer surface thereof, and a minimum rubber thickness from a bottom of the groove to the single-wire cord is 1.0 mm to 4.0 mm.

In the tire according to the present invention, it is preferred that the minimum rubber thickness is 2.0 mm to 3.0 mm.

### Advantageous Effects of Invention

The tire of the present invention has the flat single-wire cord and the topping rubber included in the belt ply, and the single-wire cord is arranged so that the direction of the short diameter SD is oriented to the thickness direction of the belt ply. Therefore, the thickness of the unvulcanized belt ply can be suppressed, thereby, reduction in weight of the tire can be achieved, and thus the fuel-efficiency performance is improved. Further, since the complex elastic modulus (E*) of the topping rubber is less than 7 MPa, bending rigidity of the belt ply is suppressed, therefore, the noise performance and the ride comfort performance are easily improved.

### Brief Description of Drawings

FIG. 1 is a cross-sectional view showing an embodiment of a tire according to the present invention.
FIG. 2 is a cross-sectional view of a belt ply according to the present invention.
FIG. 3 is a cross-sectional view of a tread portion of the tire according to the present invention,

### Mode for carrying out Invention

An embodiment of the present invention will now be described in conjunction with accompanying drawings.

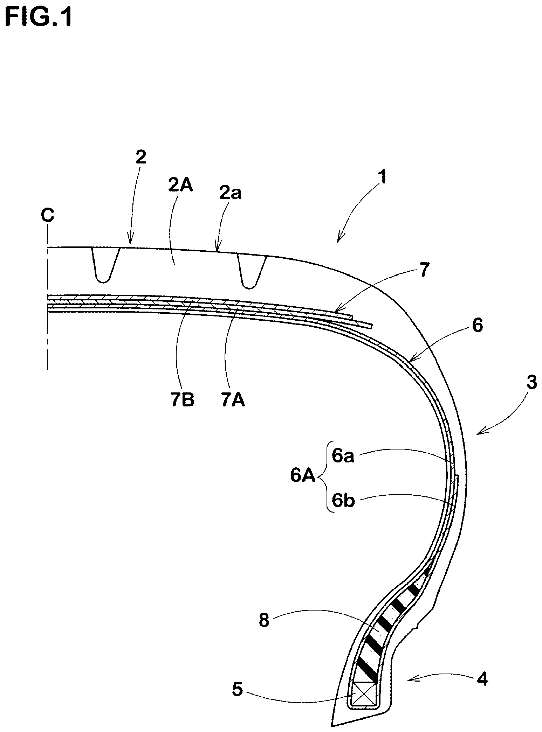

FIG. 1 shows a tire meridian section passing through a rotational axis of a tire 1 of the present embodiment of the invention in a standard state. The tire 1 of the present embodiment of the invention is suitably used as a pneumatic tire to be mounted on a passenger vehicle or the like. Note that the tire 1 is not specific to a pneumatic tire for passenger vehicles and can be applied to various tires such as, for example, pneumatic tires for heavy duty and non-pneumatic tires inside of which is not filled with pressurized air.

Here, the "standard state" is a state in which, in a case where the tire 1 is a pneumatic tire, the tire 1 is mounted on a standard rim, inflated to a standard inner pressure, and loaded with no tire load. In the following, the dimensions and so forth of each part of the tire 1 indicate values measured in this standard state, unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

As shown in FIG. 1, the tire 1 of the present embodiment of the invention has a toroidal carcass 6 extending between bead cores 5 of bead portions 4 via a tread portion 2 and sidewall portions 3, and a belt layer 7 disposed outside the carcass 6 in a tire radial direction and inside the tread portion 2.

The tread portion 2 includes a tread rubber 2A.

The carcass 6 includes at least one carcass ply, one carcass ply 6A in the present embodiment of the invention. The carcass ply 6A includes carcass cords (not shown) disposed at an angle from 75 degrees to 90 degrees with respect to a tire circumferential direction, for example. As the carcass cords, organic fiber cords made of aromatic polyamide, rayon, or the like can be used, for example.

The carcass ply 6A includes, for example, a main body portion (6a) extending between the bead cores 5 of the bead portions 4 via the tread portion 2 and the sidewall portions 3 and turned up portions (6b) connected with the main body portion (6a) and each turned up around a respective one of the bead cores 5 from an inside to an outside in a tire axial direction. Between the main body portion (6a) and each of the turned up portions (6b) of the carcass ply 6A, a bead apex rubber 8 extending radially outward from a respective one of the bead cores 5 is disposed, for example.

The belt layer 7 includes two belt plies 7A and 7B. The two belt plies 7A and 7B include a first belt ply 7A positioned on an inner side in the tire radial direction and a second belt ply 7B positioned outside the first belt ply 7A, for example. The belt layer 7 configured as such increases the rigidity of the tread portion 2, therefore, durability performance of the tire 1 can be improved. It should be noted that the belt layer 7 may be configured of three or more belt plies.

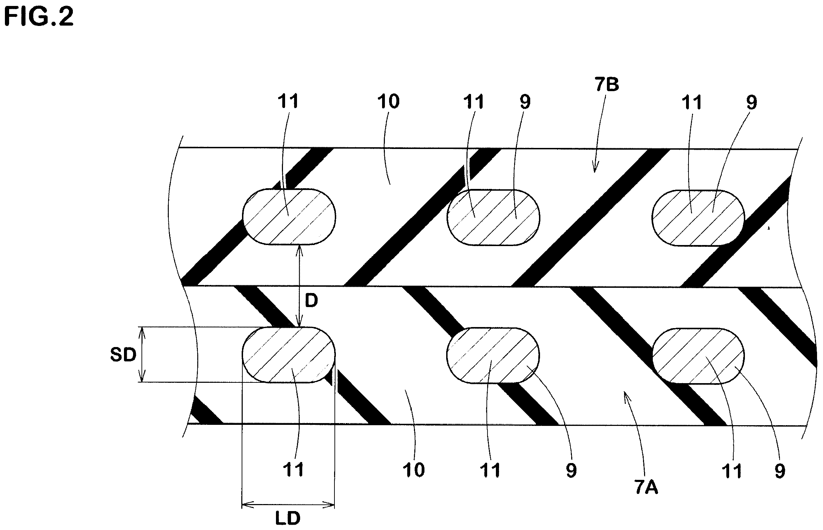

FIG. 2 is an enlarged cross-sectional view of the belt layer 7. While the belt ply 7A is exemplarily depicted in FIG. 2, a similar structure can be adopted also for the belt ply 7B. As shown in FIG. 2, the belt plies 7A and 7B of the present embodiment of the invention include belt cords 9 for reinforcing the tread portion 2 and topping rubber 10 covering the belt cords 9. In the following, the belt cords 9 and the topping rubber 10 included in the belt ply 7A will be described, but the same applies to the belt cords 9 and the topping rubber 10 included in the belt ply 7B.

Each belt cord 9 is configured of a single-wire cord 11 not having a stranded structure. In the present embodiment of the invention, the single-wire steel cord 11 is used as the belt cord 9. The material of the belt cord 9 is not limited to steel and may be other metals or the like.

The single-wire cord 11 has a short diameter SD and a long diameter LD, and a ratio SD/LD between the short diameter SD and the long diameter LD is smaller than 1.00. That is, the cross-section of the belt cord 9 is formed in a flat shape. The cross-sectional shape of the single-wire cord 11 is not particularly limited as long as the flat shape is maintained. For example, the cross-sectional shape of the single-wire cord 11 may be an oval shape, as well as a long-oval shape having an end edge thereof being partially linear.

The single-wire cord 11 is disposed so that the direction of the short diameter SD is oriented to a thickness direction of the belt ply 7A. Therefore, the thickness of the belt ply 7A is suppressed while the sectional area of the belt cord 9 is maintained. Thereby, while the steering stability performance and the durability performance of the tire 1 are maintained, reduction in weight of the tire 1 can be achieved, and the fuel efficiency performance is improved. It should be noted that the orientation of the single-wire cords 11 is substantially maintained before and after vulcanization.

The topping rubber 10 after vulcanization has a complex elastic modulus (E*) of less than 7 MPa.

Here, the complex elastic modulus (E*) of the topping rubber 10 is a value measured in accordance with Japanese Industrial Standard JIS-K6394 under the following conditions by using a dynamic viscoelasticity measurement device (EPLEXOR series) manufactured by GABO.
Initial strain: 10%
Amplitude of dynamic strain: ±1%
Frequency: 10 Hz
Deformation mode: tension
Measurement temperature: 70 degrees Celsius

Due to the complex elastic modulus (E*) of the topping rubber 10 being less than 7 MPa, the bending rigidity of the belt ply 7A is suppressed, therefore, the noise performance and the ride comfort performance of the tire 1 are easily improved.

In view of the above, a more preferred range of the complex elastic modulus (E*) of the topping rubber 10 is 5 MPa or less.

It is preferred that the complex elastic modulus (E*) of the topping rubber 10 after vulcanization is 3 MPa or more. Since the complex elastic modulus (E*) of the topping rubber 10 being 3 MPa or more, the steering stability performance and the durability performance of the tire 1 are easily improved.

In the present embodiment of the invention, it is preferred that the short diameter SD of the single-wire cord 11 is from 0.15 mm to 0.42 mm. Since the short diameter SD is 0.15 mm or more, bending, breaking, or the like of the single-wire cord 11 in the process of manufacturing the belt ply 7A is easily suppressed. Further, the cross-sectional area of the single-wire cord 11 can be easily ensured, therefore, the durability performance of the tire 1 is easily improved. On the other hand, since the short diameter SD is 0.42 mm or less, the thickness of the belt ply 7A is suppressed, thereby, reduction in weight of the tire 1 is achieved, therefore, the fuel efficiency performance is improved.

In view of the above, a more preferred range of the short diameter SD of the single-wire cord 11 is from 0.20 mm to 0.35 mm.

In the present embodiment of the invention, it is preferred that the ratio SD/LD of the single-wire cord 11 is 0.70 or less. Since the ratio SD/LD is 0.70 or less, the thickness of the belt ply 7A is suppressed, thereby, reduction in weight of the tire 1 is achieved, therefore, the fuel efficiency performance is improved.

In view of the above, a more preferred range of the ratio SD/LD of the single-wire cord 11 is 0.50 or less.

In the inventive tire, a distance (D) between the single-wire cords 11 between the plurality of belt plies 7A and 7B is from 0.30 mm to 1.05 mm. The distance (D) is defined by, as shown in FIG. 2, the shortest distance between the single-wire cord 11 of the belt ply 7A and the single-wire cord 11 of the belt ply 7B, that is, the thickness of the topping rubber 10 existing therebetween.

Since the distance (D) is 0.30 mm or more, the ride comfort performance and the noise performance are easily improved. On the other hand, since the distance (D) is 1.05 mm or less, reduction in weight of the tire 1 can be easily achieved, therefore, the fuel efficiency performance is easily improved.

In view of the above, a more preferred range of the distance D is from 0.50 mm to 0.80 mm.

It is preferred that a difference (D-SD) between the distance (D) and the short diameter SD of the single-wire cord 11 is from 0.20 mm to 0.45 mm. Since the difference (D-SD) is 0.20 mm or more, the ride comfort performance and the noise performance are easily improved. On the other hand, since the above-described difference (D-SD) is 0.45 mm or less, the fuel efficiency performance is easily improved.

In view of the above, a more preferred range of the difference (D-SD) is 0.25 mm to 0.40 mm.

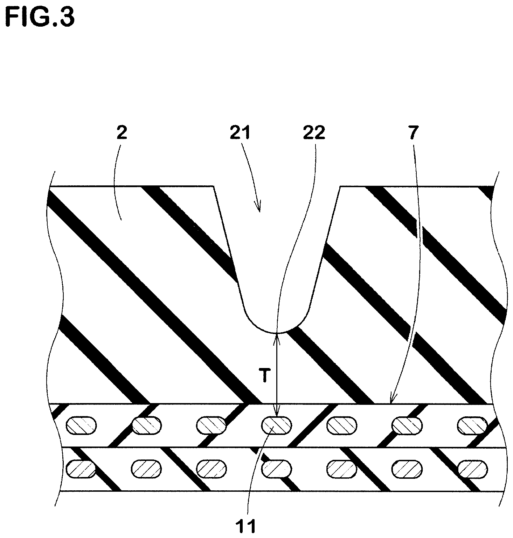

FIG. 3 shows an enlarged part of the tread portion 2. In an outer surface (2a) of the tread portion 2, a groove 21 is formed.

It is preferred that a minimum rubber thickness (T) from a bottom 22 of the groove 21 to the single-wire cord 11 is from 1.0 mm to 4.0 mm. Since the minimum rubber thickness (T) is 1.0 mm or more, the ride comfort performance and the noise performance are easily improved, and also damages on the tread portion 2 are suppressed. Since the minimum rubber thickness (T) is 4.0 mm or less, reduction in weight of the tire 1 can be easily achieved, therefore, the fuel efficiency performance is easily improved. Further, the rigidity of the tread portion 2 is easily increased and the steering stability performance is improved.

In view of the above, a more preferred range of the minimum rubber thickness (T) of the single-wire cord 11 is from 2.0 mm to 3.0 mm.

While detailed description has been made of an especially preferred embodiment of the present invention, the present invention can be embodied in various forms within the scope of the appended claims.

### Examples

Tires of size 195/65R15 having the tire meridian section of FIG. 1 were made by way of test according to the specifications of Table 1. By using the test tires, the steering stability performance, the ride comfort performance, the fuel-efficiency performance, and process passing property were evaluated. The test methods for each of the test tires were as follows.

### < Steering Stability Performance >

While a test driver drove a front-wheel-drive small passenger test vehicle (displacement: 2000 cc) with the test tires mounted on all wheels on a test course of dry asphalt with the test driver being the only member on the test vehicle, characteristics related to steering responsiveness, rigid impression, grip, and the like were evaluated by the driver's feeling. The evaluations are indicated by an evaluation point based on Reference 1 being 100, wherein a larger numerical value is better.

### < Ride Comfort Performance >

While the test driver drove the above-described test vehicle having the test tires mounted on all wheels on the test course with the test driver being the only member, the ride comfort performance was evaluated by the driver's feeling. The evaluations were indicated by an evaluation point based on Reference 1 being 100, wherein a larger numerical value is better.

### < Fuel-Efficiency Performance >

Each of the test tires was mounted on a rolling resistance testing machine, inflated to the inner pressure of 230 kPa, and loaded with a tire load of 3.43 kN, and then rolling resistance at the speed of 80 km/h was measured. The results are indicated by an index based on Reference 1 being 100, wherein a larger numerical value indicates a smaller rolling resistance, which means more excellent fuel efficiency performance.

### < Noise Performance >

Noise was measured while a test driver drove the above-described test vehicle with the test tires mounted on all wheels and the test driver being the only member on the test vehicle on a road noise measuring road. The results are indicated by an index based on Reference 1 being 100, wherein a larger numerical value indicates smaller noise, which means more excellent noise performance.

### < Balance Performance >

An average value of the steering stability performance, the ride comfort performance, the fuel-efficiency performance, and the noise performance was calculated to evaluate balance performance. The results are indicated by a numerical value based on Reference 1 being 100, wherein a larger numerical value indicates more excellent balance performance.

### < Durability Performance >

Each of the test tires was mounted on a bench durability testing machine and the running distance until the tire got damaged was measured. The results are indicated by an index based on Reference 1 being 100, wherein the larger the numerical value, the longer the running distance is, which means more excellent durability performance.

The test results are shown in Table 1.

**[Table 1]**

| | | Ref.1 | Ref.2 | Ref.3 | Ex.1 | Ex.2 | Ex.3 | Ex.4 | Ex.5 |
|---|---|---|---|---|---|---|---|---|---|
| Belt cord structure | | Stranded-wire | Single-wire | Single-wire | Single-wire | Single-wire | Single-wire | Single-wire | Single-wire |
| Belt cord configuration | | 1x2x0.295 | 1x1x0.42 | 1x1 | 1x1 | 1x1 | 1x1 | 1x1 | 1x1 |
| Short diameter SD | [mm] | 0.59 | 0.42 | 0.30 | 0.30 | 0.30 | 0.30 | 0.30 | 0.30 |
| Ratio SD/LD | | 1.00 | 1.00 | 0.61 | 0.61 | 0.61 | 0.61 | 0.61 | 0.61 |
| Complex elastic modulus (E*) | [MPa] | 6 | 8 | 8 | 4 | 2.5 | 3 | 5 | 7 |
| Distance (D) | [mm] | 0.70 | 0.70 | 0.70 | 0.70 | 0.70 | 0.70 | 0.70 | 0.70 |
| Thickness (T) | [mm] | 2.50 | 2.50 | 2.50 | 2.50 | 2.50 | 2.50 | 2.50 | 2.50 |
| Steering stability performance | [evaluation point] | 100 | 110 | 120 | 110 | 106 | 108 | 110 | 110 |
| Fuel efficiency performance | [index] | 100 | 115 | 115 | 110 | 106 | 108 | 110 | 115 |
| Ride comfort performance | [evaluation point] | 100 | 100 | 90 | 115 | 115 | 115 | 110 | 106 |
| Noise performance | [index] | 100 | 100 | 90 | 110 | 110 | 110 | 110 | 106 |
| Balance performance | [index] | 100 | 106.25 | 103.75 | 111.25 | 109.25 | 110.25 | 110 | 109.25 |
| Durability performance | [index] | 100 | 106 | 116 | 110 | 106 | 108 | 110 | 110 |

As is clear from Table 1, in the tires in Examples, compared with References, it has been confirmed that the steering stability performance, the ride comfort performance, the fuel-efficiency performance, the noise performance, and the durability performance are significantly improved in a good balance.

Tires of size 195/65R15 having the tire meridian section of FIG. 1 were made by way of test according to the specifications of Table 2. By using the test tires, the durability performance and the fuel-efficiency performance were evaluated. The test methods for each of the test tires were as follows.

### < Durability Performance >

The durability performance was evaluated by the same method as described above. The results are indicated by an index based on Example 10 being 100, wherein a larger numerical value indicates more excellent durability performance.

### < Fuel-Efficiency Performance >

The fuel-efficiency performance was evaluated by the same method as described above. The results are indicated by an index based on Example 10 being 100, wherein a larger numerical value indicates more excellent fuel-efficiency performance.

The test results are shown in Table 2.

**[Table 2]**

| | | Ex.6 | Ex.7 | Ex.8 | Ex.9 | Ex.10 | Ex. 11 | Ex. 12 |
|---|---|---|---|---|---|---|---|---|
| Belt cord structure | | Single-wire | Single-wire | Single-wire | Single-wire | Single-wire | Single-wire | Single-wire |
| Belt cord configuration | | 1x1 | 1x1 | 1x1 | 1x1 | 1x1 | 1x1 | 1x1 |
| Short diameter SD | [mm] | 0.10 | 0.15 | 0.20 | 0.25 | 0.35 | 0.42 | 0.50 |
| Ratio SD/LD | | 0.20 | 0.31 | 0.40 | 0.50 | 0.70 | 0.85 | 1.02 |
| Complex elastic modulus (E*) | [MPa] | 4.4 | 4.4 | 4.4 | 4.4 | 4.4 | 4.4 | 4.4 |
| Distance (D) | [mm] | 0.70 | 0.70 | 0.70 | 0.70 | 0.70 | 0.70 | 0.70 |
| Thickness (T) | [mm] | 2.50 | 2.50 | 2.50 | 2.50 | 2.50 | 2.50 | 2.50 |
| Durability performance | [index] | 80 | 90 | 95 | 95 | 100 | 105 | 110 |
| Fuel efficiency performance | [index] | 100 | 100 | 100 | 100 | 100 | 98 | 96 |

Tires of size 195/65R15 having the tire meridian section of FIG. 1 were made by way of test according to the specifications of Table 3. By using the test tires, the steering stability performance, the ride comfort performance, the fuel-efficiency performance, the noise performance, the balance performance, and the durability performance were evaluated. Test tires of examples 13 and 18 do not form part of the present invention. The test methods for each of the test tires were as follows.

### < Steering stability performance >

The steering stability performance was evaluated by the same method as described above. The results are indicated by an index based on Example 15 being 100, wherein a larger numerical value indicates more excellent steering stability performance.

### < Ride comfort performance >

The ride comfort performance was evaluated by the same method as described above. The results are indicated by an index based on Example 15 being 100, wherein a larger numerical value indicates more excellent ride comfort performance.

### < Fuel-Efficiency Performance >

The fuel-efficiency performance was evaluated by the same method as described above. The results are indicated by an index based on Example 15 being 100, wherein a larger numerical value indicates more excellent fuel-efficiency performance.

### < Noise Performance >

Noise was measured by the same method as described above. The results are indicated by an index based on Example 15 being 100, wherein a larger numerical value means smaller noise, which indicates more excellent noise performance.

### < Balance Performance >

An average value of the steering stability performance, the ride comfort performance, the fuel-efficiency performance, and the noise performance was calculated to evaluate the balance performance. The results are indicated by a numerical value based on Example 15 being 100, wherein a larger numerical value indicates more excellent balance performance.

### < Durability Performance >

The durability performance was evaluated by the same method as described above. The results are indicated by an index based on Example 15 being 100, wherein a larger numerical value indicates more excellent durability performance.

The test results are shown in Table 3.

**[Table 3]**

| | | Ex. 13 | Ex.14 | Ex.15 | Ex.16 | Ex.17 | Ex.18 |
|---|---|---|---|---|---|---|---|
| Belt cord structure | | Single-wire | Single-wire | Single-wire | Single-wire | Single-wire | Single-wire |
| Belt cord configuration | | 1x1 | 1x1 | 1x1 | 1x1 | 1x1 | 1x1 |
| Short diameter SD | [mm] | 0.30 | 0.30 | 0.30 | 0.30 | 0.30 | 0.30 |
| Ratio SD/LD | | 0.61 | 0.61 | 0.61 | 0.61 | 0.61 | 0.61 |
| Complex elastic modulus (E*) | [MPa] | 4.5 | 4.5 | 4.5 | 4.5 | 4.5 | 4.5 |
| Distance (D) | [mm] | 0.20 | 0.30 | 0.50 | 0.80 | 1.05 | 1.20 |
| Thickness (T) | [mm] | 2.50 | 2.50 | 2.50 | 2.50 | 2.50 | 2.50 |
| Steering stability performance | [evaluation point] | 106 | 103 | 100 | 97 | 95 | 90 |
| Fuel efficiency performance | [index] | 106 | 103 | 100 | 97 | 95 | 90 |
| Ride comfort performance | [evaluation point] | 90 | 95 | 100 | 102 | 103 | 106 |
| Noise performance | [index] | 90 | 95 | 100 | 102 | 103 | 106 |
| Balance performance | [index] | 98 | 99 | 100 | 99.5 | 99 | 98 |
| Durability performance | [index] | 98 | 99 | 100 | 100 | 99 | 98 |

Tires of size 195/65R15 having the tire meridian section of FIG. 1 were made by way of test according to the specifications of Table 4. By using the test tires, the steering stability performance, the ride comfort performance, the fuel-efficiency performance, the noise performance, the balance performance, and the durability performance were evaluated. The test methods for each of the test tires were as follows.

### < Steering stability performance >

The steering stability performance was evaluated by the same method as described above. The results are indicated by an index based on Example 22 being 100, wherein a larger numerical value indicates more excellent steering stability performance.

### < Ride comfort performance >

The ride comfort performance was evaluated by the same method as described above. The results are indicated by an index based on Example 22 being 100, wherein a larger numerical value indicates more excellent ride comfort performance.

### < Fuel-Efficiency Performance >

The fuel-efficiency performance was evaluated by the same method as described above. The results are indicated by an index based on Example 22 being 100, wherein a larger numerical value indicates more excellent fuel-efficiency performance.

### < Noise Performance >

Noise was measured by the same method as described above. The results are indicated by an index based on Example 22 being 100, wherein a larger numerical value means smaller noise, which indicates more excellent noise performance.

### < Balance Performance >

An average value of the steering stability performance, the ride comfort performance, the fuel-efficiency performance, and the noise performance was calculated to evaluate the balance performance. The results are indicated by a numerical value based on Example 22 being 100, wherein a larger numerical value indicates more excellent balance performance.

### < Durability Performance >

The durability performance was evaluated by the same method as described above. The results are indicated by an index based on Example 22 being 100, wherein a larger numerical value indicates more excellent durability performance.

The test results are shown in Table 4.

**[Table 4]**

| | | Ex. 19 | Ex.20 | Ex.21 | Ex.22 | Ex.23 | Ex.24 |
|---|---|---|---|---|---|---|---|
| Belt cord structure | | Single-wire | Single-wire | Single-wire | Single-wire | Single-wire | Single-wire |
| Belt cord configuration | | 1x1 | 1x1 | 1x1 | 1x1 | 1x1 | 1x1 |
| Short diameter SD | [mm] | 0.30 | 0.30 | 0.30 | 0.30 | 0.30 | 0.30 |
| Ratio SD/LD | | 0.61 | 0.61 | 0.61 | 0.61 | 0.61 | 0.61 |
| Complex elastic modulus (E*) | [MPa] | 4.6 | 4.6 | 4.6 | 4.6 | 4.6 | 4.6 |
| Distance (D) | [mm] | 0.40 | 0.50 | 0.55 | 0.70 | 0.75 | 0.85 |
| Difference (D-SD) | [mm] | 0.10 | 0.20 | 0.25 | 0.40 | 0.45 | 0.55 |
| Thickness (T) | [mm] | 2.50 | 2.50 | 2.50 | 2.50 | 2.50 | 2.50 |
| Steering stability performance | [evaluation point] | 108 | 106 | 100 | 100 | 97 | 95 |
| Fuel efficiency performance | [index] | 108 | 106 | 100 | 100 | 97 | 95 |
| Ride comfort performance | [evaluation point] | 86 | 90 | 100 | 100 | 102 | 103 |
| Noise performance | [index] | 86 | 90 | 100 | 100 | 102 | 103 |
| Balance performance | [index] | 97 | 98 | 100 | 100 | 99.5 | 99 |
| Durability performance | [index] | 97 | 98 | 100 | 100 | 100 | 99 |

Tires of size 195/65R15 having the tire meridian section of FIG. 1 were made by way of test according to the specifications of Table 5. By using the test tires, the steering stability performance, the ride comfort performance, the fuel-efficiency performance, the noise performance, the balance performance, and tire strength were evaluated. Test tires of examples 26 to 30 do not form part of the present invention. The test methods for each of the test tires were as follows.

### < Steering stability performance >

The steering stability performance was evaluated by the same method as described above. The results are indicated by an index based on Example 28 being 100, wherein a larger numerical value indicates more excellent steering stability performance.

### < Ride comfort performance >

The ride comfort performance was evaluated by the same method as described above. The results are indicated by an index based on Example 28 being 100, wherein a larger numerical value indicates more excellent ride comfort performance.

### < Fuel-Efficiency Performance >

The fuel-efficiency performance was evaluated by the same method as described above. The results are indicated by an index based on Example 28 being 100, wherein a larger numerical value indicates more excellent fuel-efficiency performance.

### < Noise Performance >

Noise was measured by the same method as described above. The results are indicated by an index based on Example 28 being 100, wherein a larger numerical value indicates more excellent noise performance.

### < Balance Performance >

An average value of the steering stability performance, the ride comfort performance, the fuel-efficiency performance, and the noise performance was calculated to evaluate the balance performance. The results are indicated by a numerical value based on Example 28 being 100, wherein a larger numerical value indicates more excellent balance performance.

### < Tire Strength >

The test tires were poked with a protruding object and the energy required to burst the tires was measured. The results are indicated by an index based on Example 28 being 100, wherein a larger numerical value indicates larger energy, which means high tire strength.

The test results are shown in Table 5.

**[Table 5]**

| | | Ex.25 | Ex.26 | Ex.27 | Ex.28 | Ex.29 | Ex.30 |
|---|---|---|---|---|---|---|---|
| Belt cord structure | | Single-wire | Single-wire | Single-wire | Single-wire | Single-wire | Single-wire |
| Belt cord configuration | | 1x1 | 1x1 | 1x1 | 1x1 | 1x1 | 1x1 |
| Short diameter SD | [mm] | 0.30 | 0.30 | 0.30 | 0.30 | 0.30 | 0.30 |
| Ratio SD/LD | | 0.61 | 0.61 | 0.61 | 0.61 | 0.61 | 0.61 |
| Complex elastic modulus (E*) | [MPa] | 4.7 | 4.7 | 4.7 | 4.7 | 4.7 | 4.7 |
| Distance (D) | [mm] | 0.90 | 1.30 | 2.30 | 3.30 | 4.30 | 5.30 |
| Thickness (T) | [mm] | 0.60 | 1.00 | 2.00 | 3.00 | 4.00 | 5.00 |
| Steering stability performance | [evaluation point] | 106 | 103 | 100 | 100 | 95 | 90 |
| Fuel efficiency performance | [index] | 106 | 103 | 100 | 100 | 95 | 90 |
| Ride comfort performance | [evaluation point] | 90 | 95 | 100 | 100 | 103 | 106 |
| Noise performance | [index] | 94 | 96 | 100 | 100 | 103 | 106 |
| Balance performance | [index] | 99 | 99.3 | 100 | 100 | 99 | 98 |
| Tire strength | [index] | 80 | 90 | 100 | 100 | 105 | 110 |

### Description of Reference Signs

- 1: tire
- 2: tread portion
- 2A: tread rubber
- 2a: outer surface
- 7: belt layer
- 7A: belt ply
- 7B: belt ply
- 10: topping rubber
- 11: single-wire cord
- 21: groove
- 22: bottom
- D: distance
- LD: long diameter
- SD: short diameter
- T: minimum rubber thickness

## Claims

1. A tire (1) having a belt layer (7) disposed inside a tread portion (2), wherein
the belt layer (7) has a plurality of belt plies (7A, 7B),
the plurality of belt plies (7A, 7B) includes a single-wire cord (11) having a short diameter SD and a long diameter LD, with a ratio SD/LD between the short diameter SD and the long diameter LD being less than 1.00, and a topping rubber (10) covering the single-wire cord (11), and
the single-wire cord (11) is arranged so that a direction of the short diameter SD is oriented to a thickness direction of the plurality of belt plies (7A, 7B),
**characterized in that**
the topping rubber (10) has a complex elastic modulus (E*) of less than 7 MPa, wherein the complex elastic modulus (E*) is a value measured in accordance with Japanese Industrial Standard JIS-K6394 under conditions of temperature of 70 degrees Celsius, initial strain of 10%, an amplitude of dynamic strain of ±1.0%, and a frequency of 10 Hz, and
a distance D between the single-wire cords (11) between the plurality of belt plies (7A, 7B) is 0.30 mm to 1.05 mm.

2. The tire (1) according to claim 1, wherein the complex elastic modulus (E*) is 5MPa or less.

3. The tire (1) according to claim 1 or 2, wherein the complex elastic modulus (E*) is 3 MPa or more.

4. The tire (1) according to any one of claims 1 to 3, wherein the short diameter SD is 0.15 mm to 0.42 mm.

5. The tire according to claim 4, wherein the short diameter SD is 0.20 mm to 0.35 mm.

6. The tire (1) according to any one of claims 1 to 5, wherein the ratio SD/LD of the single-wire cord (11) is 0.70 or less.

7. The tire (1) according to claim 6, wherein the ratio SD/LD of the single-wire cord (11) is 0.50 or less.

8. The tire (1) according to any one of claims 1 to 7, wherein the distance D is 0.50 mm to 0.80 mm.

9. The tire (1) according to claim 8, wherein a difference D-SD between the distance D and the short diameter SD is 0.20 mm to 0.45 mm.

10. The tire (1) according to claim 9, wherein the difference D-SD is 0.25 mm to 0.40 mm.

11. The tire (1) according to any one of claims 1 to 10, wherein
the tread portion (2) has a tread rubber having a groove (2!) provided in an outer surface thereof, and
a minimum rubber thickness (T) from a bottom (22) of the groove (21) to the single-wire cord (11) is 1.0 mm to 4.0 mm.

12. The tire (1) according to claim 11, wherein the minimum rubber thickness (T) is 2.0 mm to 3.0 mm.

## Patentansprüche

1. Reifen (1) mit einer Gürtelschicht (7), die innerhalb eines Laufflächenabschnitts (2) angeordnet ist, wobei
die Gürtelschicht (7) eine Vielzahl von Gürtellagen (7A, 7B) aufweist,
die Vielzahl von Gürtellagen (7A, 7B) einen Einzeldrahtkord (11) mit einem kurzen Durchmesser SD und einem langen Durchmesser LD, wobei ein Verhältnis SD/LD zwischen dem kurzen Durchmesser SD und dem langen Durchmesser LD kleiner als 1,00 ist, und einen Deckgummi (10), der den Einzeldrahtkord (11) bedeckt, umfasst, und
der Einzeldrahtkord (11) so angeordnet ist, dass eine Richtung des kurzen Durchmessers SD zu einer Dickenrichtung der Vielzahl von Gürtellagen (7A, 7B) ausgerichtet ist,
**dadurch gekennzeichnet, dass**
der Deckgummi (10) einen komplexen Elastizitätsmodul (E*) von weniger als 7 MPa aufweist, wobei der komplexe Elastizitätsmodul (E*) ein Wert ist, der gemäß der japanischen Industrienorm JIS-K6394 unter Bedingungen einer Temperatur von 70 Grad Celsius, einer Anfangsdehnung von 10 %, einer Amplitude der dynamischen Dehnung von ±1,0 % und einer Frequenz von 10 Hz gemessen ist, und
ein Abstand D zwischen den Einzeldrahtkorden (11) zwischen der Vielzahl von Gürtellagen (7A, 7B) 0,30 mm bis 1,05 mm beträgt.

2. Reifen (1) nach Anspruch 1, wobei der komplexe Elastizitätsmodul (E*) 5 MPa oder weniger beträgt.

3. Reifen (1) nach Anspruch 1 oder 2, wobei der komplexe Elastizitätsmodul (E*) 3 MPa oder mehr beträgt.

4. Reifen (1) nach einem der Ansprüche 1 bis 3, wobei der kurze Durchmesser SD 0,15 mm bis 0,42 mm beträgt.

5. Reifen nach Anspruch 4, wobei der kurze Durchmesser SD 0,20 mm bis 0,35 mm beträgt.

6. Reifen (1) nach einem der Ansprüche 1 bis 5, wobei das Verhältnis SD/LD des Einzeldrahtkords (11) 0,70 oder weniger beträgt.

7. Reifen (1) nach Anspruch 6, wobei das Verhältnis SD/LD des Einzeldrahtkords (11) 0,50 oder weniger beträgt.

8. Reifen (1) nach einem der Ansprüche 1 bis 7, wobei der Abstand D 0,50 mm bis 0,80 mm beträgt.

9. Reifen (1) nach Anspruch 8, wobei eine Differenz D-SD zwischen dem Abstand D und dem kurzen Durchmesser SD 0,20 mm bis 0,45 mm beträgt.

10. Reifen (1) nach Anspruch 9, wobei die Differenz D-SD 0,25 mm bis 0,40 mm beträgt.

11. Reifen (1) nach einem der Ansprüche 1 bis 10, wobei
der Laufflächenabschnitt (2) einen Laufflächengummi mit einer Rille (21) aufweist, die in einer Außenfläche davon vorgesehen ist, und
eine Mindestgummidicke (T) von einem Grund (22) der Rille (21) zu dem Einzeldrahtkord (11) 1,0 mm bis 4,0 mm beträgt.

12. Reifen (1) nach Anspruch 11, wobei die Mindestgummidicke (T) 2,0 mm bis 3,0 mm beträgt.

## Revendications

1. Pneumatique (1) ayant une couche de ceinture (7) disposée à l'intérieur d'une portion formant bande de roulement (2), dans lequel
la couche de ceinture (7) a une pluralité de nappes de ceinture (7A, 7B),
la pluralité de nappes de ceinture (7A, 7B) inclut un câblé à fil unique (11) ayant un diamètre court SD et un diamètre long LD, avec un rapport SD/LD qui est inférieur à 1,00, et un caoutchouc d'enrobage (10) couvrant le câblé à fil unique (11), et
le câblé à fil unique (11) est agencé de telle sorte qu'une direction du diamètre court SD est orientée vers une direction d'épaisseur de la pluralité de nappes de ceinture (7A, 7B),
**caractérisé en ce que**
le caoutchouc d'enrobage (10) a un module d'élasticité complexe (E*) inférieur à 7 MPa, le module d'élasticité complexe (E*) étant une valeur mesurée conformément à la norme industrielle japonaise JIS-K6394 dans les conditions suivantes : température de 70 degrés Celsius, contrainte initiale de 10 %, amplitude de contrainte dynamique de ± 1,0 %, et fréquence de 10 Hz, et
une distance D entre les câblés à fil unique (11) entre la pluralité de nappes de ceinture (7A, 7B) est de 0,30 mm à 1,05 mm.

2. Pneumatique (1) selon la revendication 1, dans lequel le module d'élasticité complexe (E*) est de 5 MPa ou moins.

3. Pneumatique (1) selon la revendication 1 ou 2, dans lequel le module d'élasticité complexe (E*) est de 3 MPa ou plus.

4. Pneumatique (1) selon l'une quelconque des revendications 1 à 3, dans lequel le diamètre court SD est de 0,15 mm à 0,42 mm.

5. Pneumatique (1) selon la revendication 4, dans lequel le diamètre court SD est de 0,20 mm à 0,35 mm.

6. Pneumatique (1) selon l'une quelconque des revendications 1 à 5, dans lequel rapport SD/LD du câblé à fil unique (11) est de 0,70 mm ou moins.

7. Pneumatique (1) selon la revendication 6, dans lequel rapport SD/LD du câblé à fil unique (11) court SD est de 0,50 mm ou moins.

8. Pneumatique (1) selon l'une quelconque des revendications 1 à 7, dans lequel la distance D est de 0,50 mm à 0,80 mm.

9. Pneumatique (1) selon la revendication 8, dans lequel une différence D--SD entre la distance D et le diamètre court SD est de 0,20 mm à 0,45 mm.

10. Pneumatique (1) selon la revendication 9, dans lequel la différence D-SD est de 0,25 mm à 0,40 mm.

11. Pneumatique (1) selon l'une quelconque des revendications 1 à 10, dans lequel
la portion formant bande de roulement (2) a un caoutchouc de bande de roulement ayant une rainure (21) prévue dans une surface extérieure de celui-ci, et
une épaisseur de caoutchouc minimum (T) depuis un fond (22) de la rainure (21) jusqu'au câblé à fil unique (11) est de 1,0 mm à 4,0 mm.

12. Pneumatique (1) selon la revendication 11, dans lequel l'épaisseur de caoutchouc minimum (T) est de 2,0 mm à 3,0 mm.
